# EUROPEAN PATENT APPLICATION

(11) **EP 4 412 128 A1**
(43) Date of publication of application: **07.08.2024**
(21) Application number: 21959184.9
(22) Date of filing: 30.12.2021
(51) Int. Cl.: H04L 5/00

(54) **COMMUNICATION METHOD AND COMMUNICATION APPARATUS**

(30) Priority: 30.09.2021 CN 202111162986
(71) Applicant: Spreadtrum Communications (Shanghai) Co., Ltd., Shanghai 201203 (CN)
(72) Inventor: ZHOU, Huayu, Shanghai 201203 (CN); WANG, Miao, Shanghai 201203 (CN); LEI, Zhenzhu, Shanghai 201203 (CN); PAN, Zhengang, Shanghai 201203 (CN)
(74) Representative: Mewburn Ellis LLP
(86) International application number: PCT/CN2021/143107
(87) International publication number: WO 2023/050625

(57) **Abstract**

Disclosed are a communication method and communication apparatus. The communication method comprises: determining that a first downlink bandwidth part (BWP) is activated, and/or determining that a synchronization signal block (SSB) is in a first downlink BWP. Thus, the overhead of the synchronization signal block can be effectively reduced.

## Description

### TECHNICAL FIELD

The disclosure relates to the field of communication technologies, and in particular, to a communication method and a communication apparatus.

### BACKGROUND

During initial access, a narrowband user equipment (UE) can work in an initial downlink bandwidth part (BWP) / initial uplink BWP which is less than or equal to the bandwidth of the narrowband UE. The initial downlink bandwidth part may be referred to as an initial downlink BWP, an initial DL BWP, or an initial active DL BWP, and the initial uplink bandwidth part may be referred to as an initial uplink BWP, an initial UL BWP, or an initial active UL BWP. Generally, an initial downlink BWP is a downlink BWP configured by a master information block (MIB) or a system information block (SIB), and an initial uplink BWP is an uplink BWP configured by an SIB. After initial access, the narrowband UE can work in an UE specific downlink BWP / UE specific downlink BWP uplink BWP which is less than or equal to the bandwidth of the narrowband UE. The UE specific downlink bandwidth part may be referred to as the UE-specific downlink BWP, the UE-specific DL BWP, or the UE-specific active DL BWP. The UE specific uplink bandwidth part may be referred to as an UE-specific uplink BWP, an UE-specific UL BWP, or an UE-specific active UL BWP. Herein, the UE-specific downlink BWP is the downlink BWP configured by a dedicated radio resource control (RRC), and the UE-specific uplink BWP is the uplink BWP configured by the dedicated RRC.

The narrowband UE switches between the initial downlink BWP, the UE-specific downlink BWP, the initial uplink BWP, and the UE-specific uplink BWP, which may cause a series of problems, such as configuration/validity of a synchronization signal block (SSB), alignment of the uplink BWP and the downlink BWP.

### SUMMARY

Embodiments of the disclosure provide a communication method and a communication apparatus, which can effectively reduce an SSB overhead.

According to a first aspect, an embodiment of the disclosure provides a communication method. The method includes: determining that a first downlink BWP is activated, and/or determining that a SSB is in the first downlink BWP.

In a possible implementation, determining that the SSB is in the first downlink BWP includes: determining that the SSB is in the first downlink BWP, after determining that a paging message contains an identifier of a terminal device, and/or after determining that a network device pages the terminal device.

In a possible implementation, determining that a first downlink BWP is activated includes: determining that the first downlink BWP is activated, after determining that a paging message contains an identifier of a terminal device, and/or after determining that a network device pages the terminal device.

In a possible implementation, determining that the SSB in the first downlink BWP comprises: determining, during a random access procedure, that the SSB is in the first downlink BWP.

In a possible implementation, determining, during the random access procedure, that the SSB is in the first downlink BWP comprises: determining that the SSB is in the first downlink BWP, after sending a physical random access channel (PRACH); or determining that the SSB is in the first downlink BWP, after receiving a random access response (RAR); or determining that the SSB is in the first downlink BWP, after sending message 3; or determining that the SSB is in the first downlink BWP, after receiving message 4.

In a possible implementation, determining that the first downlink BWP is activated includes: determining, during a random access procedure, that the first downlink BWP is activated.

In a possible implementation, the determining, during the random access procedure, that the first downlink BWP is activated includes: determining that the first downlink BWP is activated, after sending a PRACH; or determining that the first downlink BWP is activated, after receiving a RAR; or determining that the first downlink BWP is activated, after sending message 3; or determining that the first downlink BWP is activated, after receiving message 4.

In a possible implementation, determining that the SSB is in the first downlink BWP includes: determining, during a small data transmission (SDT) procedure, that the SSB is in the first downlink BWP.

In a possible implementation, determining, during the SDT procedure, that the SSB is in the first downlink BWP includes: determining that the SSB is in the first downlink BWP, after sending a physical uplink shared channel (PUSCH); or determining that the SSB is in the first downlink BWP, after receiving an uplink hybrid automatic repeat request (HARQ) feedback.

In a possible implementation, determining that the first downlink BWP is activated includes: determining, during a SDT procedure, that the first downlink BWP is activated.

In a possible implementation, determining, during the SDT procedure, that the first downlink BWP is activated includes: determining that the first downlink BWP is activated, after sending a PUSCH; or determining that the first downlink BWP is activated, after receiving an uplink HARQ feedback.

In a possible implementation, determining that the SSB is in the first downlink BWP includes: determining, in a connected state or after initial access, that the SSB is in the first downlink BWP.

In a possible implementation, determining, in the connected state or after initial access, that the first downlink BWP is activated includes: determining that the SSB is in the first downlink BWP, after receiving message 4 or receiving a radio resource control (RRC) reconfiguration message.

In a possible implementation, determining that the first downlink BWP is activated includes: determining, in a connected state or after initial access, that the first downlink BWP is activated
In a possible implementation, in the connected state or after initial access, that the first downlink BWP is activated includes: determining that the first downlink BWP is activated, after receiving message 4 or receiving a RRC reconfiguration message.

In a possible implementation, the method further includes: determining a period of the SSB in the first downlink BWP.

In a possible implementation, determining the period of the SSB in the first downlink BWP includes: determining a period of the SSB in the first downlink BWP, according to a period configuration of the SSB in system information block 1 (SIB1).

In a possible implementation, the period configuration of the SSB in SIB1 is from a serving cell SSB period parameter ssb-PeriodicityServingCell in SIB1.

In a possible implementation, determining the period of the SSB in the first downlink BWP includes: determining the period of the SSB in the first downlink BWP, according to a period configuration of an SSB dedicated to a narrowband terminal device in SIB1

In a possible implementation, the method further includes: determining a position in the first downlink BWP for actually sending the SSB.

In a possible implementation, determining the position in the first downlink BWP for actually sending the SSB includes: determining, according to a position configuration for actually sending the SSB in SIB1, the position in the first downlink BWP for actually sending the SSB.

In a possible implementation, the position configuration for actually sending the SSB in SIB1 is from a position parameter ssb-PositionsInBurst of the SSB in SIB1 in a burst.

In a possible implementation, determining the position in the first downlink BWP for actually sending the SSB includes: determining, according to a position configuration for actually sending SSB dedicated to a narrowband terminal device in SIB1, the position in the first downlink BWP for actually sending the SSB.

In a possible implementation the first downlink BWP includes an activated downlink BWP.

According to a second aspect, an embodiment of the disclosure provides a communication method. The method includes: receiving a random access response (RAR) within a RAR reception window.

In a possible implementation, the RAR reception window starts at a position which is X symbols after the last symbol of a PRACH occasion, and X is an integer greater than 1.

In a possible implementation mode, when the first downlink BWP and the first uplink BWP have different center frequencies, the RAR reception window starts at a position which is X symbols after the last symbol of a PRACH occasion, and X is an integer greater than 1; or when the first downlink BWP is not configured and the first uplink BWP is configured, the RAR reception window starts at a position which is X symbols after the last symbol of the PRACH occasion, and X is an integer greater than 1.

In a possible implementation, a duration of the X symbols is greater than or equal to a preset time.

In a possible implementation, the preset time is equal to 200 us.

In a possible implementation, X is positively correlated with the subcarrier spacing.

In a possible implementation, when subcarrier spacing =15 KHz, X=3; when subcarrier spacing = 30 KHz, X = 6.

According to a third aspect, an embodiment of the disclosure provides a communication method. The method includes: determining a measurement gap.

In a possible implementation, determining the measurement gap includes: determining the measurement gap when the synchronization signal block (SSB) is not fully included in the first downlink bandwidth portion (BWP).

In a possible implementation, the first downlink BWP includes an activated first downlink BWP.

In a possible implementation, the measurement gap includes one or more of a measurement gap measured by a local cell or a measurement gap measured by a neighbor cell.

In a fourth aspect, an embodiment of the disclosure provides a communication apparatus. The communication apparatus includes a unit for implementing the method in the first aspect, the second aspect, or the third aspect and any possible implementation thereof.

In a fifth aspect, an embodiment of the disclosure provides a communication apparatus. The communication apparatus includes a processor and a memory. The processor and the memory are mutually connected, the memory is used for storing a computer program, and the computer program includes a program instruction. The processor is configured to invoke the program instructions to perform the method of the first aspect, to perform the method of the second aspect, or perform the method of the third aspect.

In a sixth aspect, an embodiment of the disclosure provides a chip. The chip includes a processor and an interface, wherein the processor is coupled to the interface. The interface is used for receiving or outputting a signal, and the processor is used for executing a code instruction so as to execute the method of the first aspect, or execute the method of the second aspect, or execute the method of the third aspect.

In a seventh aspect, an embodiment of the disclosure provides a module device. The module device comprises a communication module, a power supply module, a storage module, and a chip module. The power supply module is configured to supply electric energy to the module device; the storage module is used for storing data and instructions; the communication module is used for performing internal communication of the module device, or is used for performing communication between the module device and an external device. The chip module is configured to execute the method of the first aspect, or execute the method of the second aspect, or execute the method of the third aspect.

According to an eighth aspect, an embodiment of the disclosure provides a computer readable storage medium. The computer readable storage medium stores a computer program. The computer program includes a program instruction. When the program instruction is executed by a processor, the processor is enabled to execute the method of the first aspect, or execute the method of the second aspect, or execute the method of the third aspect.

### BRIEF DESCRIPTION OF THE DRAWINGS

FIG. 1 is a schematic structural diagram of a communication system according to an embodiment of the disclosure.
FIG. 2 is a schematic flowchart of a communication method according to an embodiment of the disclosure.
FIG. 3 is a schematic flowchart of another communication method according to an embodiment of the disclosure.
FIG. 4 is a schematic flowchart of another communication method according to an embodiment of the disclosure.
FIG. 5 is a schematic structural diagram of a communication apparatus according to an embodiment of the disclosure.
FIG. 6 is a schematic structural diagram of another communication apparatus according to an embodiment of the disclosure.
FIG 7 is a schematic structural diagram of a module device according to an embodiment of the disclosure.

### DETAILED DESCRIPTION

The following describes the technical solutions in embodiments of the disclosure with reference to the accompanying drawings in the embodiments of the disclosure.

It should be noted that, in this specification, the terms "include", "comprise", or any other variation thereof are intended to cover a non-exclusive inclusion, so that a process, a method, an item, or an apparatus that includes a series of elements not only includes those elements, but also includes other elements that are not explicitly listed, or further includes inherent elements of the process, the method, the item, or the apparatus. Without more limitations, an element defined by the sentence "include" does not exclude other same elements existing in the process, method, item, or apparatus that includes the element. In addition, components, features and elements having the same name in different embodiments of the disclosure may have the same meaning or different meanings, the specific meaning thereof are to be determined based on the explanation in the embodiment or further in conjunction with the context in the embodiment.

It should be understood that, in this specification, the term "and/or" is only an association relationship for describing associated objects, and indicates that three relationships may exist. For example, "A and/or B" may indicate three cases: A exists separately, A and B exist simultaneously, and B exists separately. In addition, the character "/" in this description indicates that the former and latter associated objects are in an "or" relationship.

It should be understood that "a plurality of' as used herein means two or more.

It should be understood that, "the first", "the second", etc. appearing herein are only intended to illustrate and distinguish the described objects, and have no order, and do not represent a particular limitation to the number of devices in the embodiments of the disclosure, and cannot constitute any limitation to the embodiments of the disclosure.

It should be understood that, in this specification, a unidirectional communication link from a network device to a terminal device is defined as a downlink, data transmitted on the downlink is downlink data, and a transmission direction of the downlink data is referred to as a downlink direction. A unidirectional communication link from a terminal device to a network device is an uplink, data transmitted on the uplink is uplink data, and a transmission direction of the uplink data is referred to as an uplink direction.

The technical solution of the disclosure can be applied to a third generation mobile communication (3G) system, a fourth generation mobile communication (4G) system, and can also be applied to a fifth generation mobile communication (5G) system, and can also be referred to as a new radio (NR) system, or a sixth generation mobile communication (6G) system or other future communication systems.

In the embodiment of the disclosure, the terminal device may refer to various forms of user equipment (UE), an access terminal, a subscriber unit, a subscriber station, a mobile station, a mobile station (MS), a remote station, a remote terminal, a mobile device, a user terminal, a wireless communication apparatus, a user agent, or a user apparatus. The terminal device may also be a cellular telephone, a cordless telephone, a session initiation protocol (SIP) phone, a wireless local loop (WLL) station, personal digital assistant (PDA), handheld device having wireless communication capability, computing device, or other processing device connected to a wireless modem, a terminal device in a 5G network or a future evolved public land mobile network (PLMN), which is not limited in the embodiment of the disclosure.

In the embodiment of the disclosure, the network device may be a device having a wireless transceiving function or a chip disposed in the device. The network device includes, but is not limited to, an evolved node B (eNB), and a radio network controller (RNC), node B (NB), a network equipment controller (BSC), a network equipment transceiver station (BTS), a home network equipment (e.g., a home evolved node B, or home node B (HNB)), a baseband unit (BBU), a wireless relay node, a wireless backhaul node, and a transmission point (a transmission and reception point (TRP) or a transmission point (TP)), or the like, and may also be a device used in systems such as 4G, 5G, and 6G, which is not limited herein.

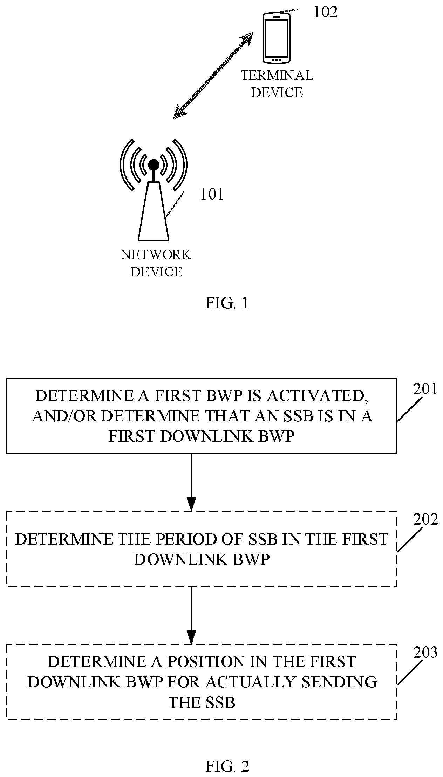

FIG. 1 is a schematic structural diagram of a communication system according to an embodiment of the disclosure. Please refer to FIG. 1, the communication system may include, but is not limited to, one or more network devices and one or more terminal devices. As shown in FIG. 1, a network device 101 and a terminal device 102 are taken as an example, where the network device 101 in FIG. 1 is a base station as an example, the terminal device 102 is a mobile phone as an example, and the terminal device 102 may establish a wireless link with the network device 101 for communication. The communication system shown in FIG. 1 includes, but is not limited to, a network device and a terminal device, and can further include other communication devices. The number and form of the devices shown in FIG. 1 are used exemplary and are not intended to limit the embodiments of the disclosure.

Firstly, a synchronization signal block (SSB) in Rel-15 NR is introduced.

In Rel-15 NR, a synchronization signal, a broadcast channel is sent in the form of a SSB, and a function of beam sweeping is introduced. A primary synchronization signal (PSS), a secondary synchronization signal (SSS) and a physical broadcast channel (PBCH) are in a synchronization/physical broadcast channel block (SS/PBCH block). For ease of description, the SS/PBCH block is hereinafter referred to as SSB. Each SSB may be considered as a resource of a beam (analog domain) in a beam sweeping process. Multiple synchronization signal blocks form a synchronization signal burst (SS-burst). The SS-burst may be regarded as a relatively concentrated resource containing multiple beams. Multiple SS-bursts form a synchronization signal burst set (SS-burst-set). A SSB is repeatedly sent on different beams, which is a beam sweeping process. By means of beam sweeping training, a UE can perceive on which a beam a strongest signal is received.

The time domain positions of L SSBs in a 5ms window are fixed. The indexes of the L SSBs are continuously arranged in time domain, ranging from 0 to L-1. Therefore, the transmission time of a SSB in the 5ms window is fixed, and the index of the SSB is also fixed.

The remaining minimum system information (RMSI) in Rel-15 NR is introduced.

The RMSI in Rel-15 NR is equivalent to a system information block (SIB) 1 in the LTE, which includes main system information except a master information block (MIB). The RMSI may also be referred to as SIB1. The RMSI is carried in a physical downlink shared channel (PDSCH), and the PDSCH is scheduled through a physical downlink control channel (PDCCH). The PDSCH carrying the RMSI is generally referred to as an RMSI PDSCH, and the PDCCH scheduling the RMSI PDSCH is generally referred to as an RMSI PDCCH.

Generally, a search space set includes properties such as a monitoring occasion and a search space type of a PDCCH. The search space set is generally bound with a control resource set (CORESET), and the CORESET includes properties such as a frequency domain resource and a duration of the PDCCH.

A search space set where the RMSI PDCCH is located is generally referred to as TypeO-PDCCH search space set. Generally, TypeO-PDCCH search space set configured by MIB. In a scenario of handover, TypeO-PDCCH search space set configured by RRC is referred to as search space 0 (or search space set 0), and a CORESET bound thereto is referred to as CORESETO. In addition to the search space set of the RMSI PDCCH, other common search space or common search space set, for example, a search space set (Type0A-PDCCH search space set) of an open system interconnection (OSI) PDCCH, a search space set (Type1-PDCCH search space set) of a random access response (RAR) PDCCH, a search space set (Type2-PDCCH search space set) of paging PDCCH, and the like, may be the same as the search space set 0 by default. In general, either the above common search space or common search space set may be reconfigured.

The RMSI PDCCH monitoring occasion has an association relationship with the SSB. The UE obtains this association relationship from an RMSI PDCCH monitoring occasion table.

During initial access, a UE finds a certain SSB, and the UE determines, according to a row index of a table indicated by a PBCH, a time domain position (a starting symbol index or a first symbol index) of an RMSI PDCCH associated with the SSB, so that the RMSI PDCCH can be detected, and an RMSI PDSCH can be received and decoded according to RMSI PDCCH scheduling.

Obtaining timing information via an SSB by a UE is introduced.

The UE needs to obtain timing information via an SSB, where the timing information may also be referred to as frame timing information or half-frame timing information, and is generally used to indicate the timing of a frame or a half-frame corresponding to the detected synchronization signal. After obtaining the frame timing information, the UE obtains complete timing information of the cell corresponding to the SSB according to a system frame number (SFN). After obtaining the half-frame timing information, the UE obtains complete timing information of the cell corresponding to the SSB through a half-frame indication (the first half-frame or the second half-frame) and the SFN.

Generally, a UE obtains timing information in 10 milliseconds by obtaining an SSB index. In a licensed spectrum, the SSB index is related to L candidate positions of the SSB. When L = 4, the low two bits (2 LSBs) of the SSB index are carried in a PBCH demodulation reference signal (PBCH-DMRS). When L>4, the low three bits (3 LSBs) of the SSB index are carried in PBCH-DMRS. When L=64, the high three bits (3 MSBs) of the SSB index are carried in PBCH payload or MIB.

Time-domain resource allocation and rate matching of the RMSI PDSCH are introduced.

In Rel-15 NR, a UE decodes an RMSI PDCCH, acquires multiple bits for time domain resource allocation, and searches a predefined table according to these bits to obtain a starting symbol index (or number) and a symbol length (or duration) of the RMSI PDSCH.

In Rel-15 NR, during initial access, the UE assumes that the RMSI PDSCH does not perform rate matching on the SSB. The RMS1 may indicate information about whether the SSB is sent, and after obtaining the RMS1, the UE may perform rate matching on the SSB indicated by the RMS 1.

The monitoring occasion of the paging PDCCH is introduced.

In Rel-15 NR, for a given UE, its corresponding paging occasion (PO) consists of a plurality of paging PDCCH monitoring occasions. In one PO, the paging PDCCH may be sent in a manner of beam sweeping, just as the SBB. In one PO, paging PDCCH monitoring occasions and SSBs on a one-to-one correspondence, that is, in one PO, a Kth paging PDCCH monitoring occasion corresponds to a Kth SSB.

Initial access in LTE Rel-13 eMTC is introduced.

In LTE Rel-13 eMTC, the eMTC UE is a narrowband UE. The bandwidth of the eMTC UE is about 1 MHz, and can cover 6 PRBs. Therefore, during initial access, the eMTC UE can detect the PSS/SSS/PBCH of the LTE. Because of a master information block (MIB) carried in the PBCH, the eMTC UE can decode the LTE MIB. In addition, the LTE MIB has 10 reserved bits (spare bits), and a part of these reserved bits can be used for carrying information about an SIB1 (SIB1-BR, different from the LTE SIB 1) scheduling the eMTC. By default, frequency domain resources of a PDSCH carrying the eMTC SIB1 are also in 6 PRBs, and therefore the eMTC UE can also receive the PDSCH carrying the eMTC SIB1. In this way, after decoding an LTE MIB, the eMTC UE acquires eMTC SIB1 information therein, and then accesses a network.

Initial access in NR is introduced.

In NR, generally, the UE supports a 100 MHz bandwidth. During initial access, the UE blindly detects the PSS/SSS/PBCH in the SSB, and acquires the MIB and time index information carried in the PBCH. The UE obtains, through information in the MIB, configuration information of CORESET (may be referred to as CORESETO) scheduling SIB1 and a search space set (may be referred to as search space set 0) of the CORESETO. Further, the UE can monitor the Type 0-PDCCH scheduling the PDSCH carrying SIB1, and decode SIB1. Since the bandwidth of CORESETO is set in the PBCH through a table, the maximum bandwidth of CORESETO is implicitly defined in the protocol. In addition, the protocol specifies that the frequency domain resource for the PDSCH carrying SIB1 is within the bandwidth (PRBs) of the CORESETO, and therefore the maximum bandwidth of the PDSCH carrying SIB1 is also implicitly defined in the protocol. In fact, in an idle state, the UE works in an initial active downlink BWP (initial active DL BWP), and a frequency domain position of the initial active downlink BWP is the same as a frequency domain position of CORESETO by default (non-default, the frequency domain position of the initial active downlink BWP can be modified by means of signaling to cover the frequency domain position of CORESETO), and therefore the maximum bandwidth of the initial active downlink BWP is implicitly defined in the protocol.

The disclosure provides a communication method and apparatus, which can effectively solve the problem of a narrowband UE switching between an initial downlink BWP, a UE-specific downlink BWP, an initial uplink BWP, and an UE-specific uplink BWP, such as the problems of configuration/validity of an SSB and alignment of uplink / downlink BWP.

Problem 1: a narrowband UE processes an SSB in an initial downlink BWP or a UE-specific downlink BWP, so as to perform any one or more of automatic gain control (AGC), time/frequency synchronization or RRM measurement. Correspondingly, the base station sends the SSB in the initial downlink BWP or the UE-specific downlink BWP. In different phases, the narrowband UE may activate different initial downlink BWPs or UE-specific downlink BWPs. For this problem, in order to reduce the overhead of the SSB, in different phases, the narrowband UE may have different assumptions about whether the SSB is sent, that is, different assumptions about the validity of the SSB.

Problem 2: a downlink BWP and an uplink BWP activated by a narrowband UE may be not aligned in terms of center frequency. In this way, the downlink BWP may be a downlink BWP shared by all or most UEs in a cell (or in a carrier), and therefore there is only one SSB in the cell (or in a carrier), and a plurality of SSBs are not required, thereby reducing the overhead of the SSB. At this time, since the center frequencies of the activated downlink BWP and uplink BWP are not aligned, the narrowband UE needs to perform radio frequency (RF) retuning of uplink/downlink switching. For the RF retuning of the uplink/downlink switching, a time gap needs to be reserved. Therefore, for this problem, the base station and the UE have to agree on some time gaps for the RF retuning of uplink/downlink switching.

Solution 3: in order to reduce the overhead of an SSB, a base station does not transmit the SSB in some downlink BWPs, and when a narrowband UE activates one of these downlink BWPs, and when it is necessary to perform any one or more of AGC, time-frequency synchronization or RRM measurement, the narrowband UE needs to perform RF retuning so as to process the SSB outside the downlink BWP. A time gap(s) needs to be reserved for the RF retuning. Therefore, for this problem, the base station and the UE have to agree on some time gaps for the RF retuning to be out of the downlink BWP.

The following describes the communication apparatus provided herein in detail.

FIG. 2 is a schematic flowchart of a communication apparatus provided in an embodiment of the disclosure. The method may be applied to a terminal device. For the description of the terminal device, reference may be made to the foregoing description, and details are not described herein again. For ease of description, the following uses a UE as an example to describe the method provided in the embodiment of the disclosure. Exemplarily, the UE used in the disclosure may be a narrowband UE. A narrowband UE refers to a UE whose bandwidth is less than the bandwidth of a general UE, for example, the bandwidth of the general UE is 100 MHz, and the bandwidth of the narrowband UE is 20MHz. The embodiment of the disclosure does not limit a specific type of the UE. It should be understood that the narrowband UE described in the embodiments of the disclosure is only an example, and shall not be construed as limitations to the embodiments of the disclosure.

As shown in FIG. 2, the method includes the following.

201. determine that a first downlink BWP is activated, and/or determine that an SSB is in the first downlink BWP.

In the embodiment of the disclosure, the first downlink BWP may be a downlink BWP or an initial downlink BWP configured for the narrowband UE. The first downlink BWP may be a downlink BWP or an initial downlink BWP configured independently from the MIB. The first downlink BWP may also be referred to as a narrowband UE specific downlink BWP, an independent downlink BWP, a narrowband UE specific initial downlink BWP or an independent initial downlink BWP. Generally, the first downlink BWP is a downlink BWP configured by higher-layer signaling, for example, configured by SIB1.

Exemplarily, determining that an SSB is in the first downlink BWP may be understood as: a UE may process the SSB in the first downlink BWP, so that the UE performs any one or more of automatic gain control, time-frequency synchronization, or RRM measurement. In general, the UE can only process SSBs within the activated first downlink BWP.

Exemplarily, the UE determining that the SSB is in the first downlink BWP may also be understood as: the UE determining that the SSB is in the activated first downlink BWP, or determining that the first downlink BWP is activated, so that the UE processes the SSB in the first downlink BWP. In this way, when the first downlink BWP is activated, the UE determines that the SSB is therein. That is to say, when the first downlink BWP is activated, the base station sends the SSB in the first downlink BWP, and thus the overhead of the SSB can be reduced. Exemplarily, only when one first downlink BWP is activated, the narrowband UE can determine that the SSB is in the narrowband UE. That is to say, instead of sending the SSB in the first downlink BWP once the first downlink BWP is configured, the base station sends the SSB in the first downlink BWP only when the first downlink BWP is activated, so that the overhead of the SSB can be reduced.

Exemplarily, determining that the first downlink BWP is activated may be understood as: determining that the first downlink BWP is in an active state, or determining that the first downlink BWP is activated, so that the UE may transmit and receive data in the first downlink BWP.

In a possible implementation, the UE determines that the SSB is in the first downlink BWP as follows: after determining that the first downlink BWP is activated, the UE determines that the SSB is in the first downlink BWP.

Exemplarily, after determining that the first downlink BWP is activated, the UE may determine that the SSB is in the first downlink BWP. Equivalently, after activating the first downlink BWP, the base station may send the SSB in the first downlink BWP. In this way, the base station sends the SSB only after the first downlink BWP is activated, thereby reducing resource overhead.

In a possible implementation, the UE determines that the SSB is in the first downlink BWP as follows: if a common search space (CSS) is configured in the first downlink BWP, and after determining that the first downlink BWP is activated, the UE determines that the SSB is in the first downlink BWP. The CSS may include at least one of a system information block 1 (SIB1) CSS, an other-system information (OSI) CSS, a random access response (RAR) CSS, and a paging CSS.

Exemplarily, if the CSS is configured in the first downlink BWP, the UE may determine that the SSB is in the first downlink BWP after determining that the first downlink BWP is activated. Equivalently, if the CSS is configured in the first downlink BWP, the base station may send the SSB in the first downlink BWP after activating the first downlink BWP. In this way, only when the CSS is configured in the first downlink BWP, the base station sends the SSB after the first downlink BWP is activated, thereby reducing resource overhead. The base station may not configure the CSS in the first downlink BWP, accordingly, the base station may also not send the SSB in the first downlink BWP, and the UE also does not determine that the SSB is in the first downlink BWP, which provides flexibility for the base station. In this way, only when the CSS is configured in the first downlink BWP and after the paging message is sent, the base station sends the SSB, thereby reducing the resource overhead.

In a possible implementation, the UE determines that the SSB is in the first downlink BWP as follows: after determining that the paging message includes an identity (ID) of the UE, or after determining that the paging message is paged, the UE determines that the SSB is in the first downlink BWP.

Exemplarily, the UE may determine that the SSB is in the first downlink BWP, after determining that the paging message contains the UE ID of the UE or determining that the UE is being paged (namely, determining that the network device (such as a base station) is paging the UE). Equivalently, after sending the paging message, the base station may send the SSB in the first downlink BWP. In this way, the base station sends the SSB only after sending the paging message, thereby reducing resource overhead.

In a possible implementation, the UE determines that the SSB is in the first downlink BWP as follows: if the CSS is configured in the first downlink BWP, after determining that the paging message includes the ID of the UE, or after determining that the UE is being paged, the UE determines that the SSB is in the first downlink BWP. The CSS includes at least one of an SIB1 CSS, an OSI CSS, a RAR CSS and a paging CSS. In this way, only when the CSS is configured in the first downlink BWP and after the paging message is sent, the base station sends the SSB, thereby reducing resource overhead.

In a possible implementation, the UE determines that the first downlink BWP is activated as follows: after determining that a paging message contains the ID of the UE, or after determining that the UE is being paged, the UE determines that the first downlink BWP is activated.

Exemplarily, the UE may determine that the configured first downlink BWP is activated after determining that the paging message contains its own UE ID or after determining that the UE is paged (namely, determining that the network device (such as a base station) is paging the UE). In this way, after sending the paging, the base station may determine that the narrowband UE is switched to the configured first downlink BWP. Next, the narrowband UE determines that the SSB is in the first downlink BWP, and equivalently, the base station may send the SSB in the first downlink BWP after sending the paging. In this way, the base station sends the SSB only after the paging message is sent, thereby reducing resource overhead.

In a possible implementation, the UE determines that the first downlink BWP is activated as follows: if the CSS is configured in the first downlink BWP, after determining that the paging message contains the ID of the UE, or after determining that the UE is being paged, the UE determines that the first downlink BWP is activated. The CSS includes at least one of an SIB1 CSS, an OSI CSS, a RAR CSS and a paging CSS. In this way, only when the CSS is configured in the first downlink BWP and after the paging message is sent, the base station sends the SSB, thereby reducing resource overhead.

In a possible implementation, the UE determines that the SSB is in the first downlink BWP as follows: the UE determines, in a random access procedure, that the SSB is in the first downlink BWP.

Exemplarily, the UE may determine, in a random access procedure, that the SSB is in the first downlink BWP. As such, the UE may determine that the SSB is in the first downlink BWP only in a random access procedure. Since the random access procedure is short, the time required to determine that the SSB in the first downlink BWP is also short, and equivalently, the time required for the base station to send the SSB in the first downlink BWP is also short, thereby reducing the overhead. It can be understood that the random access procedure in the embodiments of the disclosure includes four-step random access, two-step random access and/or random access-based small data transmission (random access based small data transmission, RA-SDT). The following description mainly uses a four-step random access procedure as an example, but shall not be construed as a limitation to the embodiments of the disclosure.

In a possible implementation, the UE determines that the SSB is in the first downlink BWP as follows: if the CSS is configured in the first downlink BWP, the UE determines, in a random access procedure, that the SSB is in the first downlink BWP. The CSS may include at least one of an SIB1 CSS, an OSI CSS, a RAR CSS, and a paging CSS. In this way, the UE may determine that the SSB is in the first downlink BWP only when the CSS is configured in the first downlink BWP and during the random access procedure. Since the random access procedure is short, the time required for determining that the SSB in the first downlink BWP is also short, and equivalently, the time required for the base station to send the SSB in the first downlink BWP is also short, thereby reducing the overhead. In this way, the base station sends the SSB only when the CSS is configured in the first downlink BWP and after the paging message is sent, thereby reducing the resource overhead.

Exemplarily, during a random access procedure, determining the SSB in the first downlink BWP may include the following implementations.

Implementation 1: after sending a physical random access channel (PRACH), the UE determines that an SSB is in a first downlink BWP.

Exemplarily, the UE may determine that the SSB is in the first downlink BWP, after sending a PRACH. The PRACH may also be referred to as message 1 (Msg1). Equivalently, the base station may send the SSB in the first downlink BWP after receiving the PRACH. In this way, the base station sends the SSB only after receiving the PRAC, thereby reducing resource overhead.

Implementation 1A: if the CSS is configured in the first downlink BWP, after sending the PRACH, the UE determines that the SSB is in the first downlink BWP. The CSS includes at least one of an SIB1 CSS, an OSI CSS, a RAR CSS and a paging CSS. In this way, the base station sends the SSB only when the CSS is configured in the first downlink BWP and after receiving the PRACH, thereby reducing resource overhead.

Implementation 2: after receiving a random access response (RAR), the UE determines that the SSB is in the first downlink BWP.

Exemplarily, after receiving the RAR message, the UE may determine that the SSB is in the first downlink BWP. The RAR may also be referred to as message 2 (Msg2). Equivalently, after sending the RAR, the base station may send the SSB in the first downlink BWP. In this way, the base station sends the SSB only after sending the RAR, thereby reducing the resource overhead.

Implementation 2A: if the CSS is configured in the first downlink BWP, after receiving the RAR message, the UE determines that the SSB is in the first downlink BWP. The CSS includes at least one of an SIB1 CSS, an OSI CSS, a RAR CSS, and a paging CSS. In this way, the base station sends the SSB only when the CSS is configured in the first downlink BWP and after sending the RAS message, thereby reducing resource overhead.

Implementation 3: after sending message 3, the UE determines that the SSB is in the first downlink BWP.

Exemplarily, after sending message 3 (Msg3), the UE may determine that the SSB is in the first downlink BWP. Equivalently, after receiving message 3, the base station may send the SSB in the first downlink BWP. In this way, the base station sends the SSB only after receiving message 3, thereby reducing resource overhead. For a two-step random access, the UE may determine that the SSB is in the first downlink BWP, after sending message A (MsgA). Equivalently, after receiving message A, the base station may send the SSB in the first downlink BWP. In this way, the base station sends the SSB only after receiving message A, thereby reducing the resource overhead.

Implementation 3A: if the CSS is configured in the first downlink BWP, after sending message 3, the UE determines that the SSB is in the first downlink BWP. The CSS includes at least one of an SIB1 CSS, an OSI CSS, a RAR CSS, and a paging CSS. In this way, the base station sends the SSB only when the CSS is configured in the first downlink BWP and after receiving message 3, thereby reducing resource overhead.

Implementation 4: after receiving message 4, the UE determines that the SSB is in the first downlink BWP.

Exemplarily, after receiving message 4 (Msg4), the UE may determine that the SSB is in the first downlink BWP. Equivalently, after sending message 4, the base station may send the SSB in the first downlink BWP. In this way, the base station sends the SSB only after sending message 4, thereby reducing resource overhead. For a two-step random access, the UE can determine that the SSB is in the first downlink BWP, after receiving the message B (MsgB). Equivalently, after sending the message B, the base station may send the SSB in the first downlink BWP. In this way, the base station sends the SSB only after sending the message B, thereby reducing resource overhead.

Implementation 4A: if the CSS is configured in the first downlink BWP, after receiving message 4, the UE determines that the SSB is in the first downlink BWP. The CSS includes at least one of an SIB1 CSS, an OSI CSS, a RAR CSS and a paging CSS. In this way, the base station sends the SSB only when the CSS is configured in the first downlink BWP and after sending message 4, thereby reducing resource overhead.

In a possible implementation, the UE determines that the first downlink BWP is activated as follows: the UE determines, during a random access procedure, that a first downlink BWP is activated.

Exemplarily, determining, during a random access procedure, that a first downlink BWP is activated includes the following implementations.

Implementation 1: after sending the PRACH, the UE determines that the first downlink BWP is activated.

Exemplarily, after sending the PRACH, the UE determines that the first downlink BWP is activated, and then determine that the SSB is in the first downlink BWP. Equivalently, the base station may activate the first downlink BWP after receiving the PRACH and then transmit the SSB in the first downlink BWP. In this way, the base station sends the SSB only after receiving the PRACH, thereby reducing resource overhead.

Implementation 1A: if the CSS is configured in the first downlink BWP, after sending the PRACH, the UE determines that the first downlink BWP is activated. The CSS includes at least one of an SIB1 CSS, an OSI CSS, a RAR CSS, and a paging CSS. In this way, the base station sends the SSB only when the CSS is configured in the first downlink BWP and after receiving the PRACH, thereby reducing resource overhead.

Implementation 2: after receiving the RAR, the UE determines that the first downlink BWP is activated.

Exemplarily, after receiving the RAR, the UE determines that the first downlink BWP is activated, and then determine that the SSB is in the first downlink BWP. Equivalently, the base station may activate the first downlink BWP after sending the RAR and then send the SSB in the first downlink BWP. In this way, the base station sends the SSB only after sending the RAR, thereby reducing resource overhead.

Implementation 2A: if the CSS is configured in the first downlink BWP, after receiving the RAR, the UE determines that the first downlink BWP is activated. The CSS includes at least one of an SIB1 CSS, an OSI CSS, a RAR CSS, and a paging CSS. In this way, the base station sends the SSB only when the CSS is configured in the first downlink BWP and after sending the RAS, thereby reducing resource overhead.

Implementation 3: after sending message 3, the UE determines that the first downlink BWP is activated.

Exemplarily, after sending message 3, the UE may determine that the first downlink BWP is activated, and then determine that the SSB is in the first downlink BWP. Equivalently, the base station may activate the first downlink BWP after receiving message 3 and then send the SSB in the first downlink BWP. In this way, the base station sends the SSB only after receiving message 3, thereby reducing resource overhead. For a two-step random access, after sending message A, the UE can determine that the first downlink BWP is activated, and then determine that the SSB is in the first downlink BWP. Equivalently, the base station may activate the first downlink BWP after receiving message A and then send the SSB in the first downlink BWP. In this way, the base station sends the SSB only after receiving message A, thereby reducing resource overhead.

Implementation 3A: if the CSS is configured in the first downlink BWP, after sending message 3, the UE determines that the first downlink BWP is activated. The CSS includes at least one of an SIB1 CSS, an OSI CSS, a RAR CSS, and a paging CSS. In this way, the base station sends the SSB only when the CSS is configured in the first downlink BWP and after sending message 3, thereby reducing resource overhead. For a two-step random access, if the CSS is configured in the first downlink BWP, after sending message A, the UE may determine that the first downlink BWP is activated, and then determine that the SSB is in the first downlink BWP. Equivalently, if the CSS is configured in the first downlink BWP, the base station may activate the first downlink BWP after receiving message A, and then send the SSB in the first downlink BWP. In this way, the base station sends the SSB only when the CSS is configured in the first downlink BWP and after message A is received, thereby reducing the resource overhead.

Implementation 4: after receiving message 4, the UE determines that the first downlink BWP is activated.

Exemplarily, after receiving message 4, the UE may determine that the first downlink BWP is activated, and then determine that the SSB is in the first downlink BWP. Equivalently, the base station may activate the first downlink BWP after sending message 4 and then send the SSB in the first downlink BWP. In this way, the base station sends the SSB only after sending message 4, thereby reducing resource overhead. For a two-step random access, after receiving message B, the UE can determine that the first downlink BWP is activated, and then determine that the SSB is in the first downlink BWP. Equivalently, the base station may activate the first downlink BWP after sending message B, and then send the SSB in the first downlink BWP. In this way, the base station sends the SSB only after message B is sent, thereby reducing resource overhead.

Implementation 4A: if the CSS is configured in the first downlink BWP, after receiving message 4, the UE determines that the first downlink BWP is activated. The CSS includes at least one of an SIB1 CSS, an OSI CSS, a RAR CSS, and a paging CSS. In this way, only when the CSS is configured in the first downlink BWP and after sending message 4, the base station sends the SSB, thereby reducing resource overhead. For a two-step random access, if the CSS is configured in the first downlink BWP, after receiving the message B, the UE may determine that the first downlink BWP is activated, and then determine that the SSB is in the first downlink BWP. Equivalently, if the CSS is configured in the first downlink BWP, the base station may activate the first downlink BWP after sending the message B, and then send the SSB in the first downlink BWP. In this way, only when the CSS is configured in the first downlink BWP and after sending message B, the base station sends the SSB, thereby reducing the resource overhead.

In a possible implementation, the UE determines that the SSB is in the first downlink BWP as follows: in a small data transmission (SDT) procedure, the UE determines that the SSB is in the first downlink BWP.

The following takes a configured grant based small data transmission (CG-SDT) as an example.

Exemplarily, in a small data transmission process, the UE may determine that the SSB is in the first downlink BWP. In this way, only in the SDT procedure, the UE determines that the SSB is in the first downlink BWP. Because the SDT procedure is relatively short, the time required for determining that the SSB is in the first downlink BWP is also relatively short. Equivalently, the time required for the base station to send the SSB in the first downlink BWP is also relatively short, thereby reducing the overhead.

Exemplarily, in a SDT procedure, determining that the SSB is in the first downlink BWP includes the following implementations.

Implementation 1: after sending a PUSCH, the UE determines that the SSB is in the first downlink BWP.

Exemplarily, after sending the PUSCH, the UE may determine that the SSB is in the first downlink BWP, where the PUSCH is a configured Grant PUSCH (CG-PUSCH). Equivalently, the base station can send the SSB in the first downlink BWP after receiving the CG-PUSCH. In this way, only after receiving the CG-PUSCH, the base station sends the SSB, thus reducing the resource overhead.

Implementation 1A: if the CSS is configured in the first downlink BWP, after sending the PUSCH, the UE determines that the SSB is in the first downlink BWP. The CSS includes at least one of an SIB1 CSS, an OSI CSS, an RAR CSS, and a paging CSS. In this way, only when the CSS is configured in the first downlink BWP and after receiving the CG-PUSCH, the base station sends the SSB, thereby reducing resource overhead.

Implementation 2: after receiving an uplink HARQ feedback, the UE determines that an SSB is in a first downlink BWP.

Exemplarily, after receiving the uplink HARQ feedback, the UE may determine that the SSB is in the first downlink BWP, where the HARQ feedback is the uplink HARQ feedback. For the SDT, the UE receives the uplink HARQ feedback after sending the CG-PUSCH, and equivalently, the base station may send the SSB in the first downlink BWP after sending the uplink HARQ feedback. With regard to the SDT, the base station sends the uplink HARQ feedback after receiving the CG-PUSCH. In this way, only after sending the uplink HARQ feedback, the base station sends the SSB, thereby reducing the resource overhead.

Implementation 2A: if the CSS is configured in the first downlink BWP, after receiving the uplink HARQ feedback, the UE determines that the SSB is in the first downlink BWP. The CSS includes at least one of an SIB1 CSS, an OSI CSS, an RAR CSS, and a paging CSS. In this way, only when the CSS is configured in the first downlink BWP and after sending the uplink HARQ feedback, the base station sends the SSB, thereby reducing resource overhead.

In a possible implementation, the UE determines that the first downlink BWP is activated as follows: in a procedure of SDT transmission, the UE determines that the first downlink BWP is activated. The configured grant based SDT is taken as an example in the following.

Exemplarily, the UE determining, in the SDT procedure, that the first downlink BWP is activated includes the following implementations.

Implementation 1, the UE determines that the first downlink BWP is activated, after sending the PUSCH.

Exemplarily, after sending the PUSCH, the UE may determine that the first downlink BWP is activated, and then determine that the SSB is in the first downlink BWP. Equivalently, the base station may activate the first downlink BWP after receiving the PUSCH and then transmit the SSB in the first downlink BWP. In this way, the base station sends the SSB only after the PUSCH is received, thereby reducing resource overhead.

In implementation 1A, if the CSS is configured in the first downlink BWP, after sending the PUSCH, the UE determines that the first downlink BWP is activated. The CSS includes at least one of an SIB1 CSS, an OSI CSS, an RAR CSS, and a paging CSS. In this way, only when the CSS is configured in the first downlink BWP and after the CG-PUSCH is received, the base station sends the SSB, thereby reducing resource overhead.

Implementation 2: after receiving the uplink HARQ feedback, the UE determines that the first downlink BWP is activated.

Exemplarily, after receiving the uplink HARQ feedback, the UE may determine that the first downlink BWP is activated, and then determine that the SSB is in the first downlink BWP. For the SDT, the UE receives the uplink HARQ feedback after sending the CG-PUSCH. Equivalently, the base station may activate the first downlink BWP after sending the uplink HARQ feedback, and then send the SSB in the first downlink BWP. With regard to the SDT, the base station sends the uplink HARQ feedback after receiving the CG-PUSCH. In this way, only after sending the uplink HARQ feedback, the base station sends the SSB, thereby reducing the resource overhead.

Implementation 2A: if the CSS is configured in the first downlink BWP, after receiving the uplink HARQ feedback, the UE determines that the first downlink BWP is activated. The CSS includes at least one of an SIB1 CSS, an OSI CSS, an RAR CSS, and a paging CSS. In this way, only when the CSS is configured in the first downlink BWP and after sending uplink HARQ feedback, the base station sends the SSB, thereby reducing resource overhead.

In a possible implementation, the UE determines that the SSB is in the first downlink BWP as follows: in the connected state or after initial access, the UE determines that the SSB is in the first downlink BWP.

Exemplarily, the UE may determine, in the connected state or after initial access, that the SSB is in the first downlink BWP. In this way, the UE may determine that the SSB is in the first downlink BWP only when the UE in the connected state or after initial access. Because the UE is not always in the connected state or after the initial access (always on), the SSB being in the first downlink BWP is not always determined (always on), and the overhead is not large.

The UE determines, in the connected state or after initial access, that the SSB is in the first downlink BWP as follows: after receiving message 4, or after receiving a RRC reconfiguration message, the UE determines that the SSB is in the first downlink BWP.

Exemplarily, the UE may determine that the SSB is in the first downlink BWP after receiving message 4 or receiving the RRC reconfiguration message. Equivalently, the base station may send the SSB in the first downlink BWP after sending message 4 or RRC reconfiguration message. Upon reception of message 4 or the RRC reconfiguration message, the UE may determine to enter into or be in the connected state. Message 4 may include an RRC setup message, an RRC resume message, and/or an RRC reestablishment message, etc. In this way, the base station sends the SSB only after sending message 4 or the RRC reconfiguration message, thereby reducing the resource overhead.

Exemplarily, the UE may determine that the SSB is in the first downlink BWP after receiving the RRC setup message, the RRC resume message and/or the RRC re-establishment message. Equivalently, the base station may send the SSB in the first downlink BWP after transmitting the RRC setup message, the RRC resume message and/or the RRC re-establishment message. In this way, only after sending the RRC establishment message, the RRC resume message and/or the RRC reestablishment message, the base station sends the SSB, thereby reducing resource overhead.

In a possible implementation, the UE determines that the SSB is in the first downlink BWP as follows: if the CSS is configured in the first downlink BWP, the UE determines, in a connected state or after initial access, that the SSB is in the first downlink BWP. The CSS may include at least one of an SIB1 CSS, an OSI CSS, a RAR CSS, and a paging CSS.

Exemplarily, if the CSS is configured in the first downlink BWP, the UE may determine, in a connected state or after initial access, that the SSB is in the first downlink BWP. In this way, only when the CSS is configured in the first downlink BWP and the UE is in the connected state or after initial access, the UE can determine that the SSB is in the first downlink BWP. Because the UE is not always in the connected state or after the initial access (always on), the SSB being in the first downlink BWP is not always determined (always on), and the overhead is not large.

If the CSS is configured in the first downlink BWP, the UE in a connected state or after initial access, determines that the SSB is in the first downlink BWP as follows: if the CSS is configured in the first downlink BWP, after receiving message 4 or after receiving a RRC reconfiguration message, the UE determines that the SSB is in the first downlink BWP. The CSS may include at least one of an SIB1 CSS, an OSI CSS, a RAR CSS, and a paging CSS.

Exemplarily, if the CSS is configured in the first downlink BWP, the UE may determine that the SSB is in the first downlink BWP, after receiving message 4 or receiving the RRC reconfiguration message. Equivalently, the base station may send the SSB in the first downlink BWP after sending message 4 or RRC reconfiguration message. If the CSS is configured in the first downlink BWP, after receiving message 4 or RRC reconfiguration message, the UE may determine to enter the connected state or be in the connected state. Message 4 may include an RRC setup message, an RRC resume message, and/or an RRC reestablishment message, etc. In this way, only when the CSS is configured in the first downlink BWP and after sending message 4 or RRC reconfiguration message, the base station sends the SSB, thereby reducing resource overhead.

Exemplarily, if the CSS is configured in the first downlink BWP, the UE may determine that the SSB is in the first downlink BWP after receiving the RRC setup message, the RRC resume message and/or the RRC re-establishment message. Equivalently, if the CSS is configured in the first downlink BWP, the base station may transmit the SSB in the first downlink BWP after transmitting the RRC setup message, the RRC resume message and/or the RRC reestablishment message. In this way, only when the CSS is configured in the first downlink BWP and after sending the RRC establishment message, the RRC resume message and/or the RRC reestablishment message, the base station sends the SSB, thereby reducing resource overhead.

In a possible implementation, the UE determines that the first downlink BWP is activated as follows: the UE determines, in the connected state or after initial access, that the first downlink BWP is activated.

Exemplarily, the UE may determine, after receiving message 4 or receiving the RRC reconfiguration message, that the first downlink BWP is activated, and then the UE determines that the SSB is in the first downlink BWP. Equivalently, the base station may activate the first downlink BWP after sending message 4 or sending RRC reconfiguration message, and then send the SSB in the first downlink BWP. Upon reception of message 4 or the RRC reconfiguration message, the UE may determine to enter into or be in the connected state. Message 4 may include an RRC establishment message, an RRC resume message and/or an RRC re-establishment message, etc. In this way, only after sending message 4 or the RRC reconfiguration message, the base station sends the SSB, thereby reducing resource overhead.

Exemplarily, after receiving the RRC setup message, the RRC resume message, and/or the RRC re-establishment message, the UE may determine that the first downlink BWP is activated, and then the UE determines that the SSB is in the first downlink BWP. Equivalently, the base station may activate the first downlink BWP after sending the RRC setup message, the RRC resume message and/or the RRC re-establishment message and then send the SSB in the first downlink BWP. In this way, only after sending the RRC establishment message, the RRC resume message and/or the RRC reestablishment message, the base station sends the SSB, thereby reducing resource overhead.

It may be appreciated that the UE may determine that the first downlink BWP is activated and/or the SSB is in the first downlink BWP, after receiving the RRC setup message, the RRC resume message, and/or the RRC re-establishment message.

In a possible implementation, the UE determines that the first downlink BWP is activated as follows: if the CSS is configured in the first downlink BWP, the UE determines, in a connected state or after initial access, that the first downlink BWP is activated. The CSS may include at least one of an SIB1 CSS, an OSI CSS, a RAR CSS, and a paging CSS.

Exemplarily, if the CSS is configured in the first downlink BWP, after receiving message 4 or receiving an RRC reconfiguration message, the UE may determine that the first downlink BWP is activated, and then the UE determines that the SSB is in the first downlink BWP. Equivalently, if the CSS is configured in the first downlink BWP, the base station may activate the first downlink BWP after sending message 4 or sending the RRC reconfiguration message, and then send the SSB in the first downlink BWP. If the CSS is configured in the first downlink BWP, after receiving message 4 or the RRC reconfiguration message, the UE may determine to enter the connected state or be in the connected state. Message 4 may include an RRC setup message, an RRC resume message and/or an RRC re-establishment message, etc. In this way, only when the CSS is configured in the first downlink BWP and after sending message 4 or the RRC reconfiguration message, the base station sends the SSB, thereby reducing resource overhead.

Exemplarily, if the CSS is configured in the first downlink BWP, after receiving the RRC setup message, the RRC resume message and/or the RRC re-establishment message, the UE may determine that the first downlink BWP is activated, and then the UE determines that the SSB is in the first downlink BWP. Equivalently, if the CSS is configured in the first downlink BWP, the base station may activate the first downlink BWP after sending the RRC setup message, the RRC resume message and/or the RRC re-establishment message, and then send the SSB in the first downlink BWP. In this way, only when the CSS is configured in the first downlink BWP and after sending the RRC setup message, the RRC resume message and/or the RRC re-establishment message, the base station sends the SSB, thus the resource overhead is reduced.

It can be understood that, the method may further include: if the CSS is configured in the first downlink BWP, after receiving the RRC setup message, the RRC resume message and/or the RRC re-establishment message, the UE determines that the first downlink BWP is activated, and/or determines that the SSB is in the first downlink BWP.

In a possible implementation, the method shown in FIG. 2 further includes the following.

202. determine a period of the SSB in the first downlink BWP.

Exemplarily, the UE determines a period of the SSB in the first downlink BWP, so that the UE may process the SSB according to the period of the SSB, and perform automatic gain control, time-frequency synchronization, RRM measurement, or the like.

Exemplarily, the UE determining the period of the SSB in the first downlink BWP may include the following implementations:
Implementation 1: determine the period of the SSB in the first downlink BWP according to the period configuration of the SSB in SIB1.

Exemplarily, the UE determines that a period of the SSB in the first downlink BWP is a periodic configuration of the SSB in SIB1, for example, the periodic configuration of the SSB in SIB1 is from an SSB period parameter ssb-Periodicity Serving Cell in SIB1. In this way, the parameter ssb-PeriodicityServingCell may be reused.

Implementation 2: determine the period of the SSB in the first downlink BWP according to the period configuration of the SSB dedicated to the narrowband UE in SIB1.

Exemplarily, the UE determines a period of the SSB in the downlink BWP as a period configuration of the SSB dedicated to the narrowband UE in SIB1. In this way, a new parameter can be used, thereby being more flexible.

In a possible implementation, the method shown in FIG. 2 further includes the following.

203: determine the position in the first downlink BWP for actually sending the SSB.

Exemplarily, the UE determines the position for actually sending the SSB in the downlink BWP. In this way, the UE may process the SSB according to the position for actually sending the SSB, and perform automatic gain control, time-frequency synchronization, and RRM measurement.

Exemplarily, determining the position for actually sending the SSB in the downlink BWP includes the following implementations.

Implementation 1: determine the position for actually sending the SSB in the first downlink BWP, according to the position configuration for actually sending the SSB in SIB1.

Exemplarily, the UE determines that a position for actually sending the SSB in the first downlink BWP is a position configuration for actually sending the SSB in SIB1. The position configuration for actually sending the SSB in SIB 1 is from the position parameter ssb_PositionslnBurst of the SSB in SIB 1 in the burst. In this way, the current ssb-PositionslnBurst parameter can be reused.

Implementation 2: determine the position for actually sending the SSB in the first downlink BWP, according to the position configuration which is for actually sending the SSB and dedicated to the narrowband UE in SIB1.

Exemplarily, the UE determines that the position for actually sending the SSB in the first downlink BWP is a position configuration which is for actually sending the SSB and dedicated to the narrowband UE in SIB1. In this way, a new parameter can be used, thereby being more flexible.

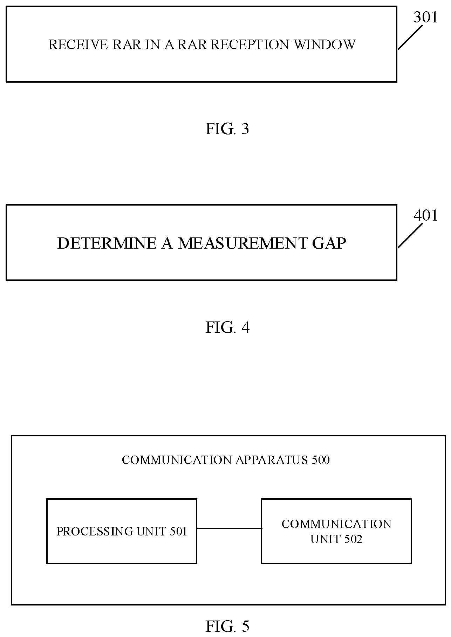

FIG. 3 is a schematic flowchart of another communication method according to an embodiment of the disclosure. The method may be applied to a terminal device. For description of the terminal device, reference may be made to the foregoing description, and details are not described herein again. For ease of description, the method provided in the embodiments of the disclosure is described below by taking a UE as an example. Exemplarily, the UE in the disclosure may be a narrowband UE. The narrowband is smaller than a bandwidth of a general UE, for example, 20MHz. The embodiment of the disclosure does not limit a specific type of the UE. It should be understood that the narrowband UEs in the embodiments of the disclosure are only examples, and shall not be construed as limitations to the embodiments of the disclosure.

As shown in FIG. 3, the method includes the following.

301. an RAR is received within a RAR reception window.

Exemplarily, a downlink BWP and an uplink BWP may be not aligned in terms of the center frequency. In this way, the downlink BWP may be a downlink BWP shared by all or most UEs in a cell (or in a carrier), and therefore, only one SSB exists in the cell (or in the carrier), and a plurality of SSBs are not required, thereby reducing SSB overhead. At this time, since the center frequencies of the activated downlink BWP and the uplink BWP are not aligned, the UE needs to perform radio frequency (RF) retuning of uplink/downlink switching. A time gap is required for the RF retuning of the uplink/downlink switching, and therefore, the base station and the UE have to agree on some time gaps for the RF retuning of the uplink/downlink switching.

In a possible implementation, the RAR reception window starts at a position which is X symbols after the last symbol of a PRACH occasion, X is an integer greater than 1. Thus, X is greater than 1, so that the RAR reception window of the UE can reserve a time gap for RF retuning of uplink/downlink switching. Exemplarily, the duration of the X symbols is greater than or equal to the preset time, in other words, X can make the duration of the X symbols greater than or equal to a preset time length or a configured time length. In this way, as long as the preset or configured time length is longer than or equal to the time gap for the RF retuning of the uplink/downlink switching, the reserved time gap for the RF retuning of the uplink/downlink switching is sufficient.

Exemplarily, the preset time may be equal to 200us, and generally, it is considered that a time gap for RF retuning of uplink/downlink switching is less than 200us.

Exemplarily, X is positively correlated with the subcarrier spacing. For example, when the subcarrier spacing is 15 kHz, X may be 3. In this way, a time longer than 200us may be reserved, which is sufficient for a time gap for RF retuning of uplink/downlink switching. When the subcarrier spacing is 30kHz, X may be 6. In this way, the time greater than 200us can be reserved, which is sufficient for the time gap for RF retuning of uplink/downlink switching.

In a possible implementation, the RAR reception window starts at a position which is X symbols after the last symbol of the PRACH occasion, when the first downlink BWP and the first uplink BWP have different center frequencies. Exemplarily, when center frequencies of a downlink BWP and an uplink BWP of the UE are different, the UE receives the RAR in an RAR reception window, where the RAR reception window starts at a position which is X symbols after a last symbol of a PRACH occasion, and X is an integer greater than 1. In this way, as long as the center frequencies of the uplink and downlink BWPs are different, it means that the time for RF retuning of uplink/downlink switching needs to be reserved.

In a possible implementation, when the first downlink BWP is not configured and the first uplink BWP is configured, the RAR reception window starts at a position which is X symbols after the last symbol of the PRACH occasion. Exemplarily, when a downlink BWP dedicated to a UE is not configured and an uplink BWP dedicated to a narrowband UE is configured, the UE receives an RAR in an RAR reception window, where the RAR reception window starts at a position which is X symbols after a last symbol of a PRACH occasion, and X is an integer greater than 1. In this way, when the downlink BWP dedicated to the UE is not configured and the uplink BWP dedicated to the UE is configured, it means that the center frequencies of the uplink and downlink BWPs are different, and it means that the time for the RF retuning of uplink/downlink switching needs to be reserved. The condition that "the downlink BWP dedicated to the UE is not configured and the uplink BWP dedicated to the UE is configured" is easier to be determined than the condition that "the center frequencies of the uplink and downlink BWPs are different".

FIG. 4 is a schematic flowchart of another communication method according to an embodiment of the disclosure. The method may be applied to a terminal device. For description of the terminal device, reference may be made to the foregoing description, and details are not described herein again. For ease of description, the method provided in the embodiments of the disclosure is described below by taking a UE as an example. Exemplarily, the UE in the disclosure may be a narrowband UE. The narrowband is less than a bandwidth of a general UE, for example, 20MHz. The embodiment of the disclosure does not limit a specific type of the UE. It should be understood that the narrowband UEs in the embodiments of the disclosure are only examples, and shall not be construed as limitations to the embodiments of the disclosure.

As shown in FIG. 4, the method includes the following.

401, a measurement gap is determined.

In a possible implementation, the measurement gap is determined when the SB is not fully included in the first downlink BWP.

Exemplarily, in order to reduce an SSB overhead, when a base station does not send an SSB in some downlink BWPs; when a narrowband UE activates one of these downlink BWPs, if AGC, time/frequency synchronization or RRM measurement needs to be performed, the narrowband UE needs to perform RF retuning so as to process the SSB outside a frequency domain resource (or bandwidth) of the downlink BWP. A time gap needs to be reserved for the RF retuning, that is to say, the base station and the UE need to agree on some time gaps for the RF retuning to be out of the downlink BWP. In general, the UE determines a measurement gap.

In a possible implementation, the UE determines that a measurement gap is needed in the measurement, when the SSB is not fully included in the specified downlink BWP or the activated downlink BWP (i.e., the first downlink BWP), etc. In this way, the narrowband UE may perform RF retuning to process the SSB outside of the frequency domain resources (or bandwidth) of the first downlink BWP, and the base station is aware of this measurement gap in which the narrowband UE is not scheduled.

Exemplarily, the measurement gap is a measurement gap measured by the local cell. In this way, for the measurement of the local cell, the narrowband UE may also perform RF retuning so as to process the SSB outside the frequency domain resources (or bandwidth) of the downlink BWP. The base station is aware of the measurement gap, and will not schedule the narrowband UE in the measurement gap.

Exemplarily, the measurement gap is a measurement gap measured by a neighbor cell. In this way, for the neighbor cell measurement, the narrowband UE may also perform RF retuning so as to process an SSB outside the frequency domain resource (or bandwidth) of a downlink BWP. The base station knows the measurement gap, and will not schedule the narrowband UE in the measurement gap.

FIG. 5 is a schematic structural diagram of a communication apparatus according to an embodiment of the disclosure. The apparatus may be a terminal device, or an apparatus in the terminal device, or an apparatus that can be matched with the terminal device for use. The communication apparatus 500 shown in FIG. 5 may include a processing unit 501 and a communication unit 502, where the processing unit 501 is configured to process data. The communication unit 502 is integrated with a receiving unit and a sending unit, and may also be referred to as transceiving unit. Alternatively, the communications unit 502 may also be divided into a receiving unit and a sending unit. The processing unit 501 is similar to the communications unit 502 and will not be further described herein.

In some embodiments of the disclosure, the processing unit 501 is configured to determine that a first downlink BWP is activated, and/or that an SSB is in the first downlink BWP.

In a possible implementation, the processing unit 501 is specifically configured to determine that the SSB is in the first downlink BWP, after determining that the paging message includes an identifier of the terminal device, and/or, after determining that the network device pages the terminal device.

In a possible implementation, the processing unit 501 is specifically configured to determine that the first downlink BWP is activated, after determining that a paging message includes an identifier of a terminal device, and/or after determining that the network device pages the terminal device.

In a possible implementation, the processing unit 501 is specifically configured to: determine, during a random access procedure, that the SSB is in the first downlink BWP.

In a possible implementation, the processing unit 501 is specifically configured to: determine that the SSB is in the first downlink BWP, after sending the PRACH; or determine that the SSB is in the first downlink BWP, after receiving the RAR; or determine that the SSB is in the first downlink BWP, after sending message 3; or determine that the SSB is in the first downlink BWP, after receiving message 4.

In a possible implementation, the processing unit 501 is specifically configured to determine, in a random access procedure, that the first downlink BWP is activated.

In a possible implementation, the processing unit 501 is specifically configured to: determine that the first downlink BWP is activated, after sending the PRACH; or determine that the first downlink BWP is activated, after receiving the RAR; or determine that the first downlink BWP is activated, after sending message 3; or determine that the first downlink BWP is activated, after receiving message 4.

In a possible implementation, the processing unit 501 is specifically configured to determine, in a SDT procedure, that the SSB is in the first downlink BWP.

In a possible implementation, the processing unit 501 is specifically configured to determine that the SSB is in the first downlink BWP, after sending a PUSCH; or determine that the SSB is in the first downlink BWP, after receiving an HARQ feedback.

In a possible implementation, the processing unit 501 is specifically configured to determine, in a SDT procedure, that the first downlink BWP is activated.

In a possible implementation, the processing unit 501 is specifically configured to determine that the first downlink BWP is activated, after sending the PUSCH; or determine that the first downlink BWP is activated after receiving the uplink HARQ feedback.

In a possible implementation, the processing unit 501 is specifically configured to determine, in a connected state or after initial access, that the SSB is in the first downlink BWP.

In a possible implementation, the processing unit 501 is specifically configured to determine that the SSB is in the first downlink BWP, after receiving message 4 or receiving the RRC reconfiguration message.

In a possible implementation, the processing unit 501 is specifically configured to determine, in a connected state or after initial access, that the first downlink BWP is activated.

In a possible implementation, the processing unit 501 is specifically configured to determine that the first downlink BWP is activated, after receiving message 4 or the RRC reconfiguration message.

In a possible implementation, the processing unit 501 is further configured to determine a period of the SSB in the first downlink BWP.

In a possible implementation, the processing unit 501 is specifically configured to determine, according to a period configuration of an SSB in a system information block SIB1, a period of the SSB in the first downlink BWP.

In a possible implementation, the period configuration of the SSB in SIB1 is from a serving cell synchronization signal block period parameter ssb-Periodicity Serving Cell in SIB1.

In a possible implementation, the processing unit 501 is specifically configured to determine the period of the SSB in the first downlink BWP according to a period configuration of the SSB dedicated to the narrowband terminal device in SIB1.

In a possible implementation, the processing unit 501 is specifically configured to determine a position in the first downlink BWP for actually sending the SSB.

In a possible implementation, the processing unit 501 is specifically configured to determine, according to a position configuration for actually sending the SSB in SIB1, a position in the first downlink BWP for actually sending the SSB.

In a possible implementation, the position configuration for actually sending the SSB in SIB1 is obtained from a position parameter ssb-PositionsInBurst of the SSB in SIB1 in a burst.

In a possible implementation, the processing unit 501 is specifically configured to determine the position in the first downlink BWP for actually sending the SSB, according to the position configuration for sending the SSB dedicated to the narrowband terminal device in SIB1.

In a possible implementation, the first downlink BWP includes an activated downlink BWP.

In other embodiments of the present disclosure, the communication unit 502 is configured to receive a RAR within a RAR reception window.

Alternatively, the processing unit 501 is configured to receive the RAR in a RAR reception window through the communication unit 502.

In a possible implementation, the RAR reception window starts at a position which is X symbols after the last symbol of a PRACH occasion, X is an integer greater than 1.

In a possible implementation mode, when the first downlink BWP and the first uplink BWP have different center frequencies, the RAR reception window starts at a position which is X symbols after the last symbol of the PRACH occasion, and X is an integer greater than 1; or when the first downlink BWP is not configured and the first uplink BWP is configured, the RAR reception window starts at a position which is X symbols after the last symbol of the PRACH occasion, and X is an integer greater than 1.

In a possible implementation, a duration of the foregoing X symbols is greater than or equal to a preset time.

In a possible implementation, the preset time is equal to 200 us.

In a possible implementation, X is positively correlated with the subcarrier spacing.

In a possible implementation, when the subcarrier spacing is equal to 15 KHz, X=3; when subcarrier spacing = 30 KHz, X = 6.

In further embodiments of the application, the processing unit 501 is configured to determine a measurement gap.

In a possible implementation, the processing unit 501 is specifically configured to determine the measurement gap when the SSB is not fully included in the first BWP.

In a possible implementation the first downlink BWP includes an activated first downlink BWP.

In a possible implementation, the measurement gap includes one or more of a measurement gap measured by a local cell and a measurement gap measured by a neighbor cell.

For related content of this implementation, reference may be made to related content of the foregoing method embodiment, and details are not described herein again.

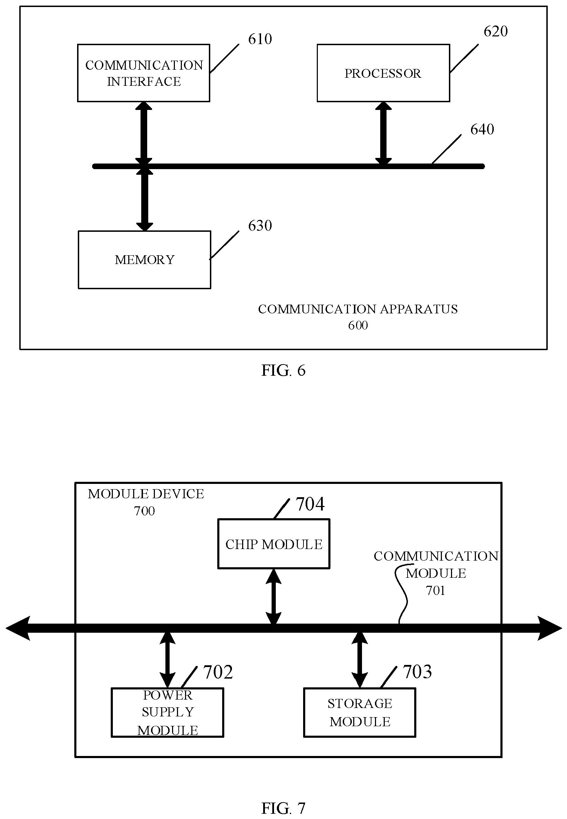

Please refer to FIG. 6, FIG. 6 is a schematic structural diagram of another communication apparatus according to an embodiment of the disclosure, which is configured to implement functions of the terminal device in FIG. 2 to FIG. 4. The communication apparatus 600 may be a terminal device or an apparatus for a terminal device, where the apparatus for a terminal device may be a chip system or a chip within the terminal device. The chip system may be formed by a chip, and may also include a chip and another discrete component.

The communication apparatus 600 includes at least one processor 620, configured to implement functions of a terminal device in the method provided in the embodiment of the disclosure. The communication apparatus 600 can further include a communication interface 610, configured to implement a receiving and sending operation of the terminal device in the method provided in the embodiment of the disclosure. In the embodiment of the disclosure, the processor 620 may be a central processing unit (CPU), and the processor may also be another general processor, a digital signal processor (DSP), an application specific integrated circuit (ASIC), a field-programmable gate array (FPGA), or another programmable logic device, a discrete gate or transistor logic device, a discrete hardware component, or the like. The general-purpose processor may be a microprocessor, or the processor may also be any conventional processor. In embodiments of the disclosure, the communication interface 610 may be a transceiver, a circuit, a bus, a module, or other type of communication interface for communicating over a transmission medium and other devices. For example, the communication interface 610 is configured to enable a device in the communication apparatus 600 to communicate with another device, and the processor 620 is configured to receive and send data by using the communication interface 610, and is configured to implement the methods described in the foregoing method embodiments shown in FIG. 2 to FIG. 4.

Communication device 600 may also include at least one memory 630 for storing program instructions and/or data. The memory 630 is coupled to the processor 620. The coupling in the embodiments of the disclosure is indirect coupling or communication connection between apparatuses, units, or modules, and may be in electrical, mechanical, or other forms, and is used for information exchange between the apparatuses, units, or modules. The processor 620 may operate in conjunction with the memory 630. The processor 620 may execute program instructions stored in the memory 630. At least one of the at least one memory may be included in a processor.

After the communication apparatus 600 is powered on, the processor 620 may read a software program in the memory 630, interpret and execute an instruction of the software program, and process data of the software program. When data needs to be sent in a wireless manner, after baseband processing is performed on the data to be sent, the processor 620 outputs a baseband signal to a radio frequency circuit (not illustrated in the figure), and after performing radio frequency processing on the baseband signal, the radio frequency circuit sends a radio frequency signal outwards in the form of an electromagnetic wave through an antenna. When data is sent to the communication apparatus 600, the radio frequency circuit receives a radio frequency signal through an antenna, converts the radio frequency signal into a baseband signal, and outputs the baseband signal to the processor 620; and the processor 620 converts the baseband signal into data and processes the data.

In another implementation, the radio frequency circuit and the antenna may be disposed separately from the processor 620 that performs baseband processing. For example, in a distributed scenario, the radio frequency circuit and the antenna may be disposed in a remote manner separately from the communication apparatus.

The embodiment of the disclosure does not limit a specific connection medium among the foregoing communication interface 610, the processor 620, and the memory 630. In the embodiment of the disclosure, in FIG. 6, a memory 630, a processor 620, and a communication interface 610 are connected via a bus 640, where the bus is shown by a thick line in FIG. 6, and a connection manner between other components is only for illustrative purpose and is not limited thereto. The bus may be classified into an address bus, a data bus, a control bus, and the like. For ease of representation, FIG. 6 uses only one thick line, but does not indicate that there is only one bus or one type of bus.

When the communication apparatus 600 is specifically used in a terminal device, for example, when the communication apparatus 600 is specifically a chip or a chip system, a baseband signal may be output or received by the communication interface 610. When the communication apparatus 600 is specifically a terminal device, a radio frequency signal may be output or received by the communication interface 610.

It should be noted that, the communication apparatus may execute steps related to the terminal device or the network device in the foregoing method embodiments. For details, reference may be made to the implementation provided in the foregoing steps, and details are not repeatedly described herein.

With regard to various devices and products applied to or integrated into a communication apparatus, various modules contained therein can all be realized by means of circuit and hardware, Different modules may be located in the same component (for example, a chip, a circuit module, and so on) or different components in the terminal. Alternatively, at least some of the modules may be implemented by using a software program running on a processor integrated inside the terminal, the remaining (if any) part of the modules may be implemented by hardware such as circuits.

The memory may be volatile memory or non-volatile memory, or may include both volatile and non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. Volatile memory may be random access memory (RAM), which serves as an external cache, by way of example and not limitation. Many forms of random access memory (RAM) are available, such as static RAM, SRAM, dynamic random access memory (DRAM), synchronous dynamic random access memory (SDRAM), double data rate synchronous dynamic random access memory (DRAM), DDR SDRAM), enhanced synchronous dynamic random access memory (Enhanced SDRAM, ESDRAM), and sync link dynamic random access memory (SLDRAM) and direct rambus RAM (DR RAM).

Provided is a chip. The chip includes a processor and a memory, wherein the number of processors can be one or more, and the number of memories can be one or more. The processor may execute the foregoing communication method shown in FIG. 2 to FIG. 4 and steps in related implementations by reading an instruction and data stored in the memory.

As shown in FIG. 7, FIG. 7 is a schematic structural diagram of a module device according to an embodiment of the disclosure. The module device 700 may execute steps related to the terminal device in the foregoing method embodiments. The module device 700 includes: a communication module 701, a power supply module 702, a storage module 703, and a chip module 704. The power supply module 702 is used for providing electric energy for the module device; the storage module 703 is used for storing data and instructions. The communication module 701 is configured to perform internal communication within the module device, or perform communication between the module device and an external device; The chip module 704 may perform the steps of the communication method shown in FIG. 2 to FIG. 4 and the steps in related embodiments.

It should be understood that, for specific description of the chip module, reference may also be made to FIG. 5 or FIG. 6, and details are not described herein again.

Embodiments of the disclosure further provide a computer readable storage medium. The computer readable storage medium stores a computer program. The computer program comprises a program instruction. When the program instruction is executed by a processor, the communication method shown in FIG. 2 to FIG. 4 and steps in related implementations can be executed.

The computer readable storage medium may be an internal storage unit of the terminal device according to any one of the foregoing embodiments, for example, a hard disk or a memory of the device. The computer readable storage medium may also be an external storage device of the terminal device, such as a plug-in hard disk, a smart memory card (SMC), a secure digital (SD) card, and a flash card that are equipped on the device. Further, the computer readable storage medium may also include both an internal storage unit of the terminal device and an external storage device. The computer readable storage medium is configured to store the computer program and other programs and data required by the terminal device. The computer readable storage medium may also be used to temporarily store data that has been output or is to be output. The computer readable storage medium may be any available medium that can be accessed by a computer, or a data storage device such as a server or a data center that includes one or more available media sets. The useable medium may be a magnetic medium (e. g., floppy disk, hard disk, magnetic tape), an optical medium (e. g., digital video disc (DVD)), or a semiconductor medium. The semiconductor medium may be a solid state disk.

The embodiments described above may be implemented in whole or in part by software, hardware, firmware, or any combination thereof. When implemented using software, the embodiments described above may be implemented in whole or in part in the form of a computer program product. The computer program product includes one or more computer instructions or computer programs. When the computer instructions or computer programs are loaded or executed on a computer, a procedure or function according to the embodiments of the disclosure is completely or partially generated. The computer may be a general purpose computer, a special purpose computer, a computer network, or other programmable apparatus. The computer instruction may be stored in a computer readable storage medium, or transmitted from one computer readable storage medium to another computer readable storage medium. For example, the computer instruction may be transmitted from one website, computer, server, or data center to another website, computer, server, or data center in a wired or wireless manner.

It should be understood that, in various embodiments of the disclosure, a sequence number of each of the foregoing processes does not imply an execution sequence, and an execution sequence of each of the processes should be determined according to a function and an internal logic thereof, which should not constitute any limitation to an implementation process of the embodiments of the disclosure.

In the several embodiments provided in the disclosure, it should be understood that the disclosed method, apparatus, and system may be implemented in other manners. For example, the apparatus embodiments described above are merely exemplary. For example, division of the units is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network elements. A part or all of the units may be selected according to actual requirements to achieve the objectives of the solutions of the embodiments.

In addition, functional units in the embodiments of the disclosure may be integrated into one processing unit, or each of the units may be physically included separately, or two or more units may be integrated into one unit. The integrated unit may be implemented in a form of hardware, or may also be implemented in a form of hardware plus a software functional unit.

The integrated unit implemented in the form of a software functional unit may be stored in a computer readable storage medium. The software functional unit is stored in a storage medium, and includes several instructions for instructing a computer device (which may be a personal computer, a server, and the like) to perform a part of the steps of the methods described in the embodiments of the disclosure.

Persons of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (ROM), a random access memory (RAM), or the like.

Although the disclosure has been described through several exemplary embodiments, it should be understood by those skilled in the art that various changes and modifications may be made without departing from the spirit and scope of the disclosure.

## Claims

1. A communication method, comprising:
determining that a first downlink bandwidth part (BWP) is activated, and/or determining that a synchronization signal block (SSB) is in a first downlink BWP.

2. The method according to claim 1, wherein determining that the SSB is in the first downlink BWP comprises:
determining that the SSB is in the first downlink BWP, after determining that a paging message contains an identifier of a terminal device, and/or after determining that a network device pages the terminal device.

3. The method according to claim 1, wherein determining that the first downlink BWP is activated comprises:
determining that the first downlink BWP is activated, after determining that a paging message contains an identifier of a terminal device, and/or after determining that a network device pages the terminal device.

4. The method according to claim 1, wherein determining that the SSB is in the first downlink BWP comprises:
determining, during a random access procedure, that the SSB is in the first downlink BWP.

5. The method according to claim 4, wherein determining, during the random access procedure, that the SSB is in the first downlink BWP comprises:
determining that the SSB is in the first downlink BWP, after sending a physical random access channel (PRACH); or
determining that the SSB is in the first downlink BWP, after receiving a random access response (RAR); or
determining that the SSB is in the first downlink BWP, after sending message 3; or,
determining that the SSB is in the first downlink BWP, after receiving message 4.

6. The method according to claim 1, wherein determining that the first downlink BWP is activated comprises:
determining, during a random access procedure, that the first downlink BWP is activated.

7. The method according to claim 6, wherein determining, during the random access procedure, that the first downlink BWP is activated comprises:
determining that the first downlink BWP is activated, after sending a PRACH; or
determining that the first downlink BWP is activated, after receiving a RAR; or
determining that the first downlink BWP is activated, after sending message 3; or
determining that the first downlink BWP is activated, after receiving message 4.

8. The method according to claim 1, wherein determining that the SSB is in the first downlink BWP comprises:
determining, during a small data transmission (SDT) procedure, that the SSB is in the first downlink BWP.

9. The method according to claim 8, wherein determining, during the SDT procedure, that the SSB is in the first downlink BWP comprises:
determining that the SSB is in the first downlink BWP, after sending a physical uplink shared channel (PUSCH); or,
determining that the SSB is in the first downlink BWP, after receiving an uplink hybrid automatic repeat request (HARQ) feedback.

10. The method according to claim 1, wherein determining that the first downlink BWP is activated comprises:
determining, during a SDT procedure, that the first downlink BWP is activated.

11. The method according to claim 10, wherein determining, during the SDT procedure, that the first downlink BWP is activated comprises:
determining that the first downlink BWP is activated, after sending a PUSCH; or
determining that the first downlink BWP is activated, after receiving an uplink HARQ feedback.

12. The method according to claim 1, wherein determining that the SSB is in the first downlink BWP comprises:
determining, in a connected state or after initial access, that the SSB is in the first downlink BWP.

13. The method according to claim 12, wherein determining, in the connected state or after initial access, that the SSB is in the first downlink BWP comprises:
determining that the SSB is in the first downlink BWP, after receiving message 4 or receiving a radio resource control (RRC) reconfiguration message.

14. The method according to claim 1, wherein determining that the first downlink BWP is activated comprises:
determining, in a connected state or after initial access, that the first downlink BWP is activated.

15. The method according to claim 14, wherein determining, in the connected state or after initial access, that the first downlink BWP is activated comprises:
determining that the first downlink BWP is activated, after receiving message 4 or receiving a RRC reconfiguration message.

16. The method according to any one of claims 1 to 15, further comprising:
determining a period of the SSB in the first downlink BWP.

17. The method according to claim 16, wherein determining the period of the SSB in the first downlink BWP comprises:
determining a period of the SSB in the first downlink BWP, according to a period configuration of the SSB in system information block 1 (SIB1).

18. The method according to claim 17, wherein the period configuration of the SSB in SIB1 is from a serving cell SSB period parameter ssb-PeriodicityServingCell in SIB1.

19. The method according to claim 16, wherein determining the period of the SSB in the first downlink BWP comprises:
determining the period of the SSB in the first downlink BWP, according to a period configuration of an SSB dedicated to a narrowband terminal device in SIB1.

20. The method according to any one of claims 1 to 19, further comprising:
determining a position in the first downlink BWP for actually sending the SSB.

21. The method according to claim 20, wherein determining the position in the first downlink BWP for actually sending the SSB comprises:
determining, according to a position configuration for actually sending the SSB in SIB1, the position in the first downlink BWP for actually sending the SSB.

22. The method according to claim 21, wherein the position configuration for actually sending the SSB in SIB1 is from a position parameter ssb-PositionsInBurst of the SSB in SIB1 in a burst.

23. The method according to claim 20, wherein determining the position in the first downlink BWP for actually sending the SSB comprises:
determining, according to a position configuration for actually sending SSB dedicated to a narrowband terminal device in SIB1, the position in the first downlink BWP for actually sending the SSB.

24. The method according to any one of claims 1 to 23, wherein the first downlink BWP comprises an activated downlink BWP.

25. A communication method, comprising:
receiving a random access response (RAR) within a RAR reception window.

26. The method according to claim 25, wherein the RAR reception window starts at a position which is X symbols after the last symbol of a PRACH occasion, and X is an integer greater than 1.

27. The method according to claim 25 or 26, wherein when the first downlink BWP and the first uplink BWP have different center frequencies, the RAR reception window starts at a position which is X symbols after the last symbol of a PRACH occasion, and X is an integer greater than 1; or
when the first downlink BWP is not configured and the first uplink BWP is configured, the RAR reception window starts at a position which is X symbols after the last symbol of the PRACH occasion, and X is an integer greater than 1.

28. The method according to claim 26 or 27, wherein a duration of the X symbols is greater than or equal to a preset time.

29. The method according to claim 28, wherein the preset time is equal to 200 us.

30. The method according to claim 26 or 27, wherein X is positively correlated with a subcarrier spacing.

31. The method as claimed in claim 30, wherein
subcarrier spacing = 15 KHz, and X = 3; or
subcarrier spacing = 30 KHz, and X = 6.

32. A communication method, comprising:
determining a measurement gap.

33. The method according to claim 32, wherein determining the measurement gap comprises:
determining the measurement gap when the synchronization signal block (SSB) is not fully included in the first downlink bandwidth portion (BWP).

34. The method of claim 33, wherein the first downlink BWP comprises an activated first downlink BWP.

35. The method according to claim 33 or 34, wherein the measurement gap comprises one or more of a measurement gap measured by a local cell or a measurement gap measured by a neighbor cell.

36. A communication apparatus, comprising a unit for performing the method according to any one of claims 1 to 35.

37. A communication apparatus, wherein the communication apparatus comprises a processor and a memory, wherein the processor and the memory are connected to each other, the memory is configured to store a computer program, the computer program comprises a program instruction, and the processor is configured to invoke the program instruction to execute the method according to any one of claims 1 to 35.

38. A chip, wherein the chip comprises a processor and an interface, and the processor is coupled to the interface, the interface is configured to receive or output a signal, and the processor is configured to execute a code instruction to cause the method according to any one of claims 1 to 35 is executed.

39. A module device, wherein the module device comprises a communication module, a power supply module, a storage module, and a chip module, wherein
the power module is configured to provide electric energy for the module device;
the storage module is configured to store data and instructions;
the communication module is used for internal communication of the module device, or used for communication between the module device and an external device;
the chip module is configured to execute the method according to any one of claims 1 to 35.

40. A computer readable storage medium, wherein the computer readable storage medium stores a computer program, the computer program comprises a program instruction, and when the program instruction is executed by a processor, cause the processor to execute the method according to any one of claims 1 to 35.
